# EUROPEAN PATENT APPLICATION

(11) **EP 2 480 014 A1**
(43) Date of publication of application: **25.07.2012**
(21) Application number: 10788654.1
(22) Date of filing: 25.03.2010
(51) Int. Cl.: H04W 4/14

(54) **METHOD AND SYSTEM FOR PERFORMING SHORT MESSAGE TERMINAL CALLING CONTROL**

(30) Priority: 23.10.2009 CN 200910207115
(71) Applicant: ZTE Corporation, Shenzhen, Guangdong 518057 (CN)
(72) Inventor: Chen, Zhengguang, Shenzhen Guangdong 518057 (CN)
(74) Representative: Waddington, Richard
(86) International application number: PCT/CN2010/071319
(87) International publication number: WO 2010/145258

(57) **Abstract**

A method and system for performing control on short message mobile terminated are disclosed by the present invention, wherein, the method includes: intercepting a route message of an inter-network short message, performing redirection processing, guiding the calling short message center to transmit the inter-network short message which is mobile terminated to a preset redirection location (S301); performing service control on the inter-network short message in the redirection location (S302). The present invention can realize the service control on the inter-network short message by the called network, thereby improving the security of the short message service, also realizing the service, such as the called value-added service and so on, and increasing the profit of the operator.

## Description

### Technical Field

The present invention relates to the field of mobile communication, and in particular, to a method and system for performing control on short message mobile terminated.

### Background of the Related Art

Along with the high-speed development of the global system for mobile communications (GSM) / the universal mobile telecommunications system (UTMS) mobile communication service, the short message service becomes an indispensable part in people's routine work and life gradually. The development of the short message service, when bringing the juicy profit to the mobile communication operator, also puts forward the new challenge to the operator.

The processing of one short message service is divided into two processes, short message mobile terminated and short message mobile terminated. The short message mobile terminated process is that the calling user submits the short message to the calling user home short-message center (the calling short message center); the short message mobile terminated process is that the calling short message center queries the route information of the called user from the called user home location register innovation (HLR) at first, and then sends to the called user directly according to route information.

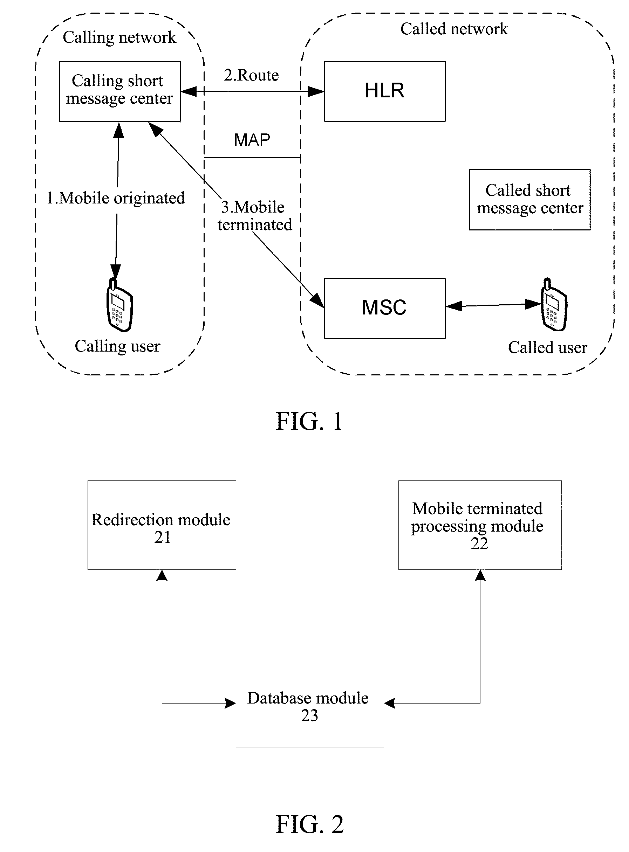

As shown in FIG. 1, on the basis of the GSM/UTMS protocol, the inter-network short message of the calling and called users belonging to different operators is sent to the called user directly only via the calling user home short-message center (the calling short message center). This processing mode of the short message brings some problems on processing the short message service to the called user home network. For example, it is unable to monitor the short messages (inter-network short message) from other operators in the called user home short-message center (the called message center).

In sum, performing control on the inter-network short message mobile terminated is the realistic focus problem that the mobile communication operator currently pays close attention to.

### Summary of the Invention

The technical problem to be solved by the present invention is to provide a method and system for performing control on short message mobile terminated, which can realize the service control of the called network on the inter-network short message.

In order to solve the above-mentioned technical problem, the present invention provides a method for performing control on short message mobile terminated, comprising:
intercepting a route message of inter-network short message, performing redirection processing, and guiding a calling short message center to transmit the inter-network short message which is mobile terminated to a preset redirection location; and
performing service control on the inter-network short message at the redirection location.

The above-mentioned method further can have the following characteristics:
the intercepted route message of the inter-network short message is a route query request of the inter-network short message; and
after intercepting the route query request of the inter-network short message, in the step of performing the redirection processing, through setting called route information as a preset route, and the preset route is returned to a calling short message center sending out the route query request of the inter-network short message to perform redirection processing on the inter-network short message.

The above-mentioned method further can have the following characteristics:
the intercepted route message of the inter-network short message is the route query request of the inter-network short message; and
after intercepting the route query request of the inter-network short message, in the step of performing the redirection processing, a called route information query is performed according to the route query request of the inter-network short message, a location where a user is located in the searched-out called route information is modified to be a preset redirection location, and the modified called route information is returned to the calling short message center sending out the route query request of the inter-network short message to perform the redirection processing on the inter-network short message.

The above-mentioned method further can have the following characteristics:
the intercepted route message of the inter-network short message is a route query response of the inter-network short message; and
after intercepting the route query response of the inter-network short message, in the step of performing the redirection processing, the location where the user is located in the called route information carried by the route query response of the inter-network short message is modified to be a preset redirection location, and the modified route query response of the inter-network short message is returned to the corresponding calling short message center.

The above-mentioned method further can have the following characteristics:
the method further comprises: storing the called route information of the inter-network short message at a preset storage location;
in the step of performing the called route information query according to the route query request of the inter-network short message, firstly the called route information is queried from the preset storage location, and if the called route information cannot be searched out or the searched-out called route information is invalid, then the called route information is queried from the called home location register innovation (HLR), and the searched-out called route information is stored in the preset storage location; and
the route information being invalid comprises that the route information has not been used or has already expired.

The above-mentioned method further can have the following characteristics:
the method further comprises: setting the called route information of the inter-network short message through a mode of opening account at a preset storage location;
in the step of performing the called route information query according to the route query request of the inter-network short message, the called route information is queried from the preset storage location, and if the called route information cannot be searched out or the searched-out called route information is invalid, then the short message route query response that the user is absent or doesn't exist is returned to the calling short message center directly; and
the route information being invalid comprises that the route information has not been used or has already expired.

The above-mentioned method further can have the following characteristics:
performing service control on the inter-network short message in the redirection location comprises: one or more processings of performing junk short message monitoring processing on the inter-network short message, performing lawful listening processing, performing a called short message value-added service, a service statistical processing and a mobile number portability service processing.

In order to solve the above-mentioned technical problem, the present invention provides a system for performing control on short message mobile terminated, comprising a redirection module and a mobile terminated processing module, wherein:
the redirection module is configured to intercept a route message of an inter-network short message, perform redirection processing, and guide a calling short message center to transmit the inter-network short message which is mobile terminated to a preset redirection location; and
the mobile terminated processing module is configured to perform service control on the inter-network short message in the redirection location.

The above-mentioned system further can have the following characteristics:
the redirection module is configured to: the intercepted route message of the inter-network short message is a route query request of the inter-network short message; and after intercepting a route query request of the inter-network short message, through setting called route information as a preset route, and return the preset route to a calling short message center sending out the route query request of the inter-network short message to perform redirection processing on the inter-network short message.

The above-mentioned system further can have the following characteristics:
the redirection module is configured to: the intercepted route message of the inter-network short message is the route query request of the inter-network short message; and after intercepting the route query request of the inter-network short message, perform the called route information query according to the route query request of the inter-network short message, and modify a location where a user is located in the searched-out called route information to be a preset redirection location, and return the modified called route information to the calling short message center sending out the route query request of the inter-network short message to perform the redirection processing on the inter-network short message.

The above-mentioned system further can have the following characteristics:
the redirection module is configured to: the intercepted route message of the inter-network short message is a route query response of the inter-network short message; and after intercepting the route query response of the inter-network short message, modify the location where the user is located in the called route information carried by the route query response of the inter-network short message to be a preset redirection location, and return the modified route query response of the inter-network short message to a corresponding calling short message center to perform the redirection processing on the inter-network short message.

The above-mentioned system further comprises a database module, wherein:
the database module is configured to store the called route information of the inter-network short message;
the redirection module is configured to: when performing the called route information query according to the route query request of the inter-network short message, firstly query the called route information from the database module, and if the called route information cannot be searched out or the searched-out called route information is invalid, query the called route information from the called home location register innovation (HLR), and store the searched-out called route information in the database module; and the route information being invalid comprises that the route information has not been used or has already expired.

The above-mentioned system further comprises a database module, wherein:
the database module is configured to set and store the called route information of the inter-network short message through a mode of opening account;
the redirection module is configured to: when performing the called route information query according to the route query request of the inter-network short message, query the called route information from the database module, and if the called route information cannot be searched out or the searched-out called route information is invalid, return the short message route query response that the user is absent or doesn't exist to the calling short message center directly; and
the route information being invalid comprises that the route information has not been used or has already expired.

The above-mentioned system further can have the following characteristics:
the mobile terminated processing module is configured to: perform service control on the inter-network short message sent to the redirection location, which comprises: one or more processings of performing junk short message monitoring processing on the inter-network short message, performing lawful listening processing, performing a called short message value-added service, a service statistical processing and a mobile number portability service processing.

A method and system for performing control on short message mobile terminated provided by the present invention, through the redirection processing and the mobile terminated control processing, the service control of called network can be implemented on the inter-network short message, thereby improving the security of the short message service, also realizing the service, such as the called value-added service and so on, and increasing the profit of the operator.

### Brief Description of Drawings

FIG. 1 is a schematic diagram of a processing scheme of an inter-network short message according to the related art;
FIG. 2 is a structure diagram of a system for controlling short message mobile terminated according to the embodiment of the present invention;
FIG. 3 is a flow chart of a method for performing control on inter-network short message mobile terminated according to the present invention;
FIG. 4 is a flow chart of the first method for performing control on inter-network short message mobile terminated according to the embodiment of the present invention;
FIG. 5 is a flow chart of the second method for performing control on inter-network short message mobile terminated according to the embodiment of the present invention;
FIG. 6 is a flow chart of the third method for performing control on inter-network short message mobile terminated according to the embodiment of the present invention.

### Preferred Embodiments of the Present Invention

The implementation scheme of the present invention is described in detail combining with the accompanying drawings hereinafter.

Referring to FIG. 2, the figure shows a system for controlling short message mobile terminated according to an embodiment of the present invention, comprising a redirection module 21, a mobile terminated processing module 22 and a database module 23, wherein:
the redirection module 21 is configured to intercept a route message of an inter-network short message, perform redirection processing, and guide a calling short message center to transmit the inter-network short message which is mobile terminated to a preset redirection location.

Furthermore, the redirection module 21 performing the mobile terminated redirection on the inter-network short message includes one of the several following situations:
(1) intercepting the route query request of the inter-network short message sent to the called home location register innovation (HLR) by the calling short message center in the network, and after intercepting the inter-network short message route query request, setting the called route information as a preset route, for example, setting different called users to correspond to different IMSI information, setting the location where the user is located as a preset redirection location and so on, and returning the preset route information to the calling short message center sending out the inter-network short message route query request;
(2) intercepting the route query request of the inter-network short message sent to the called home location register innovation (HLR) by the calling short message center in the network, and after intercepting the inter-network short message route query request, querying the route information of the called user according to the route query request of the inter-network short message, and modifying a location where the user is located in the searched-out called route information to be a preset redirection location, and returning the modified called route information to the calling short message center sending out the route query request of the inter-network short message.
(3) intercepting the route query response of the inter-network short message returned to the calling short message center in the network, wherein, the route query response of the inter-network short message carries the route information of the called user, modifying the location where the user is located in the called route information carried by the route query response of the inter-network short message to be a preset redirection location, and returning the modified called route query response to the calling short message center sending out the route query request of the inter-network short message.

As to the above-mentioned situation (2), furthermore:
the called route information of the inter-network short message is stored in the database module 23. The redirection module 21, when acquiring the called route information of the inter-network short message, firstly queries the called route information from the database module 23, and if the called route information cannot be searched out or the searched-out called route information is invalid, then the called route information is queried from the called home location register innovation (HLR), and the searched-out called route information is stored in the database module 23. The route information being invalid includes that the route information has not been used or has already expired. The mobile terminated processing module 22, when performing the short message mobile terminated processing, can send the inter-network short message to the called party according to but not limited to the valid called route information stored in the database module 23.

The called route information in the database module 23 can be set through the mode of opening account (that is, the mode of directly operating the database), but it is not limited to the mode of opening account. When the called route information of the inter-network short message is set in the database module 23 through the mode of opening account (that is, the mode of directly operating the database), the redirection module 21, when not searching out the valid called route information from the database module 23, can return the short message route query response that the user is absent or doesn't exist to the calling short message center directly.

As to the above-mentioned situation (3), furthermore:
the called route information of the inter-network short message is stored in the database module 23. The redirection module 21, when acquiring the called route information of the inter-network short message, acquires the called route information carried therein from the intercepted route query response of the inter-network short message directly, and stores it in the database module 23. The mobile terminated processing module 22, when performing the mobile terminated processing on short message, can send the inter-network short message to the called party according to but not limited to the called route information stored in the database module 23.

The route information includes the user information and the location information. Wherein, the user information is the inherent attribute of the user, for instance, the information such as the user number, IMSI and so on; the location information includes the information required by the short message mobile terminated, for instance the information such as the VMSC where the called user is located and so on.

The redirection module 21 can intercept the route query request of the inter-network short message sent to the called home location register innovation (HLR) by the calling short message center at the network elements, such as STP, GMSC, HLR or SMSC and so on, in the network, or intercept the route query response of the inter-network short message returned to the calling short message center. Part or all of the redirection module 21 can be embedded in the network elements, such as STP, GMSC, HLR or SMSC, etc.

The mobile terminated processing module 22 is configured to perform service control on the inter-network short message sent to the redirection location.

Furthermore, the service control performed by the mobile terminated processing module 22 on the inter-network short message sent to the redirection location includes: one or more processings of performing junk short message monitoring processing on the external-network short message, performing lawful listening processing, performing a called short message value-added service, a service statistical processing and a mobile number portability service processing and the short message mobile terminated processing.

The database module 23 is configured to store the called route information of the inter-network short message.

The mobile terminated processing module 22 and the database module 23 can be embedded in network elements such as SMSC, etc.

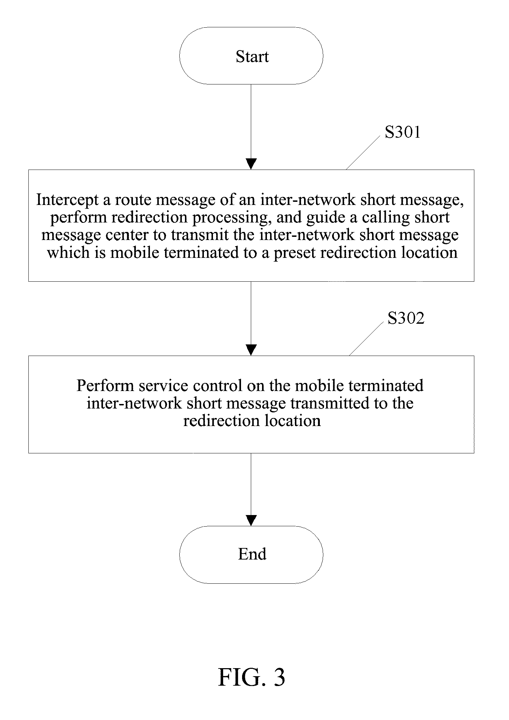

Referring to FIG. 3 hereinafter, the figure shows the processing flow of the mobile terminated control according to the present invention, including the following steps:
in step S301, a route message of an inter-network short message is intercepted, and redirection processing is performed, and a calling short message center is guided to transmit the inter-network short message which is mobile terminated to a preset redirection location;
in step S302, the service control is performed on the mobile terminated inter-network short message transmitted to the redirection location.

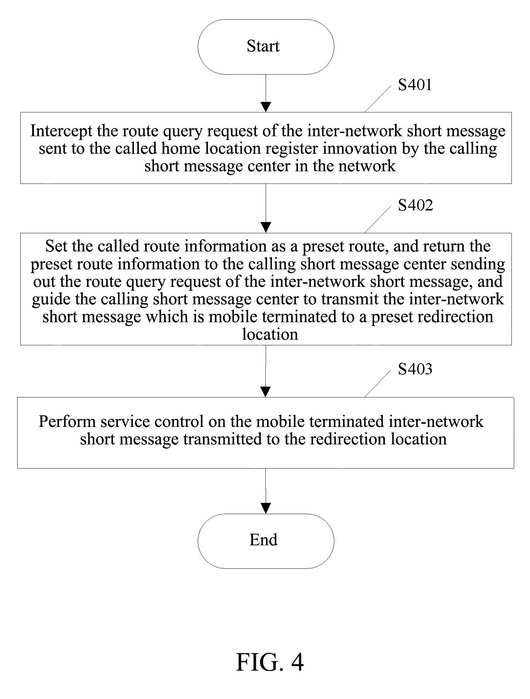

In the specific implementation, the route message of an inter-network short message intercepted in step S301 can be a route query request, and also can be a route query response. In view of the above, the present invention puts forward 3 specific methods for performing control on the inter-network short message mobile terminated, please referring to FIG. 4, 5, 6 respectively.

Referring to FIG. 4 hereinafter, the figure shows the first method for performing control on inter-network short message mobile terminated according to the embodiment of the present invention, including the following steps:
in step S401, the route query request of the inter-network short message sent to the called home location register innovation (HLR) by the calling short message center is intercepted in the network;
the route query request of the short message can be monitored and analyzed in the network, and when finding that there is a route query request of the inter-network short message, it is intercepted before sending the route query request of the inter-network short message to the called home location register innovation;
specifically, the route query request of the inter-network short message sent to the called home location register innovation (HLR) by the calling short message center can be intercepted in the network elements, such as STP, GMSC, HLR or SMSC and so on, in the network;
in step 402, the called route information is set as a preset route, and the preset route information is returned to the calling short message center sending out the route query request of the inter-network short message, and the calling short message center is guided to transmit the inter-network short message which is mobile terminated to a preset redirection location;
in step 403, the service control is performed on the mobile terminated inter-network short message transmitted to the redirection location, and it ends.

The service control performed on the inter-network short message sent to the redirection location includes: one or more processings of performing junk short message monitoring processing on the external-network short message, performing lawful listening processing, performing a called short message value-added service, a service statistical processing and a mobile number portability service processing and the short message mobile terminated processing.

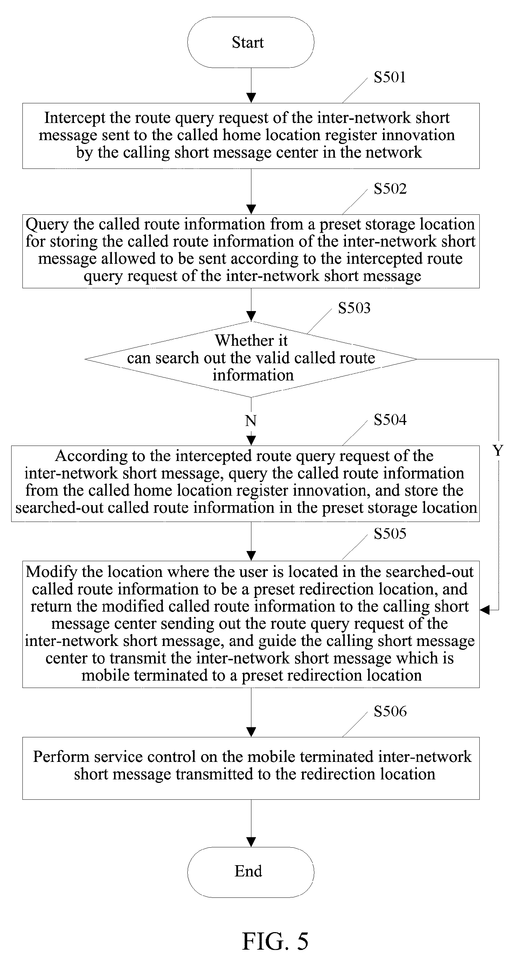

Referring to FIG. 5 hereinafter, the figure shows the second method for performing control on inter-network short message mobile terminated according to the embodiment of the present invention, including the following steps:
in step S501, the route query request of the inter-network short message sent to the called home location register innovation (HLR) by the calling short message center is intercepted in the network;
the route query request of the short message can be monitored and analyzed in the network, and when finding that there is a route query request of the inter-network short message, it is intercepted before sending the route query request of the inter-network short message to the called home location register innovation;
specifically, the route query request of the inter-network short message sent to the called home location register innovation (HLR) by the calling short message center can be intercepted in the network elements, such as STP, GMSC, HLR or SMSC and so on, in the network;
in another embodiment, it proceeds to step S504 directly from step S501;
in step S502, the called route information is queried from a preset storage location for storing the called route information of the inter-network short message according to the intercepted route query request of the inter-network short message;
the called route information of the inter-network short message stored in the storage location can be set through the mode of opening account (that is, the mode of directly operating the database), but it is not limited to the mode of opening account;
in step S503, it is judged whether the valid called route information can be searched out; if the judgment result is "yes", proceed to step S505; otherwise, proceed to step S504;
the above route information being valid includes that the route information has been used or has not expired;
in another embodiment, if the called route information of the inter-network short message stored in the storage location is set by the user through the mode of opening account, it also can be that, when not searching out the called route information in the preset storage location, the short message route query response that the user is absent or doesn't exist can be returned to the calling short message center directly and it ends;
in step S504, according to the intercepted route query request of the inter-network short message, the called route information is queried from the called home location register innovation (HLR), and the searched-out called route information is stored in the preset storage location, and proceed to step S505;
in step S505, the location where the user is located in the searched-out called route information is modified to be a preset redirection location, and the modified called route information is returned to the calling short message center sending out the route query request of the inter-network short message, and the calling short message center is guided to transmit the inter-network short message which is mobile terminated to a preset redirection location;
in step S506, the service control is performed on the mobile terminated inter-network short message transmitted to the redirection location, and it ends.

The service control performed on the inter-network short message sent to the redirection location by includes: one or more processings of performing junk short message monitoring processing on the external-network short message, performing lawful listening processing, performing a called short message value-added service, a service statistical processing and a mobile number portability service processing and the short message mobile terminated processing.

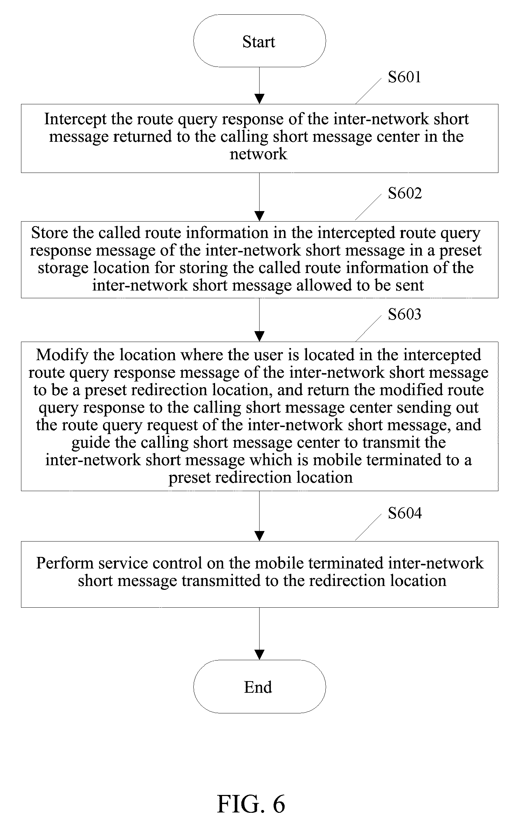

Referring to FIG. 6 hereinafter, the figure shows the third method for performing control on inter-network short message mobile terminated according to the embodiment of the present invention, including the following steps:
in step S601, the route query response of the inter-network short message returned to the calling short message center is intercepted in the network, wherein the route query response of the inter-network short message carries the route information of the called user;
the route query response of the short message can be monitored and analyzed in the network, and when finding that there is a route query response of the inter-network short message, it is intercepted before sending the route query response of the inter-network short message to the calling short message center;
specifically, the route query response of the inter-network short message returned to the calling short message center can be intercepted in the network elements, such as STP, GMSC, HLR or SMSC and so on, in the network;
in step S602, the called route information in the intercepted route query response message of the inter-network short message is stored in a preset storage location for storing the called route information of the inter-network short message;
in step S603, the location where the user is located in the intercepted route query response message of the inter-network short message is modified to be a preset redirection location, and the modified route query response is returned to the calling short message center sending out the route query request of the inter-network short message, and the calling short message center is guided to transmit the inter-network short message which is mobile terminated to a preset redirection location;
in step 604, the service control is performed on the mobile terminated inter-network short message transmitted to the redirection location, and it ends.

The service control performed on the inter-network short message sent to the redirection location includes: one or more processings of performing junk short message monitoring processing on the external-network short message, performing lawful listening processing, performing a called short message value-added service, a service statistical processing and a mobile number portability service processing and the short message mobile terminated processing.

To sum up, a method and system for performing control on short message mobile terminated according to the present invention, through the redirection processing and the mobile terminated control processing, can realize the service control of the called network on the inter-network short message, thereby improving the security of the short message service, also realizing the service, such as the called value-added service and so on, and increasing the profit of the operator through the present invention.

Although the present invention is described in combination with specific embodiments, those skilled in the art can make the modifications and variations without departing from the spirit and essence of the present invention. And all of these modifications or the variations are regarded in the scope of the present invention and the scope of the appended claims.

### Industrial Applicability

A method and system for performing control on short message mobile terminated provided by the present invention, through the redirection processing and the mobile terminated control processing, can realize the service control of the called network on the inter-network short message, thereby improving the security of the short message service, also realizing the service, such as the called value-added service and so on, and increasing the profit of the operator

## Claims

1. A method for performing control on short message mobile terminated, comprising:
intercepting a route message of an inter-network short message, performing redirection processing, and guiding a calling short message center to transmit the inter-network short message which is mobile terminated to a preset redirection location; and
performing service control on the inter-network short message in the redirection location.

2. The method according to claim 1, wherein,
the intercepted route message of the inter-network short message is a route query request of the inter-network short message; and
after intercepting the route query request of the inter-network short message, in the step of performing the redirection processing, through setting called route information as a preset route, the preset route is returned to a calling short message center sending out the route query request of the inter-network short message to perform the redirection processing on the inter-network short message.

3. The method according to claim 1, wherein,
the intercepted route message of the inter-network short message is a route query request of the inter-network short message; and
after intercepting the route query request of the inter-network short message, in the step of performing the redirection processing, a called route information query is performed according to the route query request of the inter-network short message, and a location where a user is located in searched-out called route information is modified to be the preset redirection location, and the modified called route information is returned to a calling short message center sending out the route query request of the inter-network short message to perform the redirection processing on the inter-network short message.

4. The method according to claim 1, wherein,
the intercepted route message of the inter-network short message is a route query response of the inter-network short message; and
after intercepting the route query response of the inter-network short message, in the step of performing the redirection processing, a location where a user is located in called route information carried by the route query response of the inter-network short message is modified to be the preset redirection location, and the modified route query response of the inter-network short message is returned to a corresponding calling short message center.

5. The method according to claim 3, wherein,
the method further comprises: storing the called route information of the inter-network short message in a preset storage location;
in the step of performing the called route information query according to the route query request of the inter-network short message, firstly the called route information is queried from the preset storage location, and if the called route information cannot be searched out or the searched-out called route information is invalid, the called route information is queried from called home location register innovation (HLR), and the searched-out called route information is stored in the preset storage location; and
the route information being invalid comprises that the route information has not been used or has already expired.

6. The method according to claim 3, wherein,
the method further comprises: setting the called route information of the inter-network short message through a mode of opening account in a preset storage location;
in the step of performing the called route information query according to the route query request of the inter-network short message, the called route information is queried from the preset storage location, and if the called route information cannot be searched out or the searched-out called route information is invalid, a short message route query response that the user is absent or doesn't exist is returned to the calling short message center directly; and
the route information being invalid comprises that the route information has not been used or has already expired.

7. The method according to claim 1, wherein,
performing the service control on the inter-network short message in the redirection location comprises: one or more processings of performing junk short message monitoring processing on the inter-network short message, performing lawful listening processing, performing a called short message value-added service, a service statistical processing and a mobile number portability service processing.

8. A system for performing control on short message mobile terminated, comprising a redirection module and a mobile terminated processing module, wherein:
the redirection module is configured to intercept a route message of an inter-network short message, perform redirection processing, and guide a calling short message center to transmit the inter-network short message which is mobile terminated to a preset redirection location; and
the mobile terminated processing module is configured to perform service control on the inter-network short message in the redirection location.

9. The system according to claim 8, wherein,
the redirection module is configured to: the intercepted route message of the inter-network short message is a route query request of the inter-network short message; after intercepting the route query request of the inter-network short message, through setting called route information as a preset route, return the preset route to a calling short message center sending out the route query request of the inter-network short message to perform the redirection processing on the inter-network short message.

10. The system according to claim 8, wherein,
the redirection module is configured to: the intercepted route message of the inter-network short message is a route query request of the inter-network short message; after intercepting the route query request of the inter-network short message, perform a called route information query according to the route query request of the inter-network short message, modify a location where a user is located in searched-out called route information to be the preset redirection location, and return the modified called route information to a calling short message center sending out the route query request of the inter-network short message to perform the redirection processing on the inter-network short message.

11. The system according to claim 8, wherein,
the redirection module is configured to: the intercepted route message of the inter-network short message is a route query response of the inter-network short message; after intercepting the route query response of the inter-network short message, modify a location where a user is located in called route information carried by the route query response of the inter-network short message to be the preset redirection location, and return the modified route query response of the inter-network short message to a corresponding calling short message center to perform the redirection processing on the inter-network short message.

12. The system according to claim 10, further comprising a database module, wherein:
the database module is configured to store the called route information of the inter-network short message;
the redirection module is configured to: when performing the called route information query according to the route query request of the inter-network short message, firstly query the called route information from the database module, and if the called route information cannot be searched out or the searched-out called route information is invalid, query the called route information from called home location register innovation (HLR), and store the searched-out called route information in the database module; and the route information being invalid comprises that the route information has not been used or has already expired.

13. The system according to claim 10, further comprising a database module, wherein:
the database module is configured to set and store the called route information of the inter-network short message through a mode of opening account;
the redirection module is configured to: when performing the called route information query according to the route query request of the inter-network short message, query the called route information from the database module, and if the called route information cannot be searched out or the searched-out called route information is invalid, return a short message route query response that the user is absent or doesn't exist to the calling short message center directly; and
the route information being invalid comprises that the route information has not been used or has already expired.

14. The system according to claim 8, wherein,
the mobile terminated processing module is configured to: perform the service control on the inter-network short message sent to the redirection location, comprising: one or more processings of performing junk short message monitoring processing on the inter-network short message, performing lawful listening processing, performing a called short message value-added service, a service statistical processing and a mobile number portability service processing.
